# EUROPÄISCHE PATENTSCHRIFT

(11) **EP 0 835 392 B1**
(45) Veröffentlichungstag und Bekanntmachung des Hinweises auf die Patenterteilung: **28.07.1999**
(21) Anmeldenummer: 95944742.6
(22) Anmeldetag: 18.03.1995
(51) Int. Cl.: F16C 35/067, F16C 33/58

(54) **GEFLANSCHTES LAGER**
FLANGED BEARING
PALIER A FLASQUES

(30) Priorität: 16.09.1994 DE 94150591
(43) Veröffentlichungstag der Anmeldung: 15.04.1998
(73) Patentinhaber: INA Wälzlager Schaeffler oHG, 91072 Herzogenaurach (DE)
(72) Erfinder: BRESAN, Rolf, D-91074 Herzogenaurach (DE)
(86) Internationale Anmeldenummer: EP9501022
(87) Internationale Veröffentlichungsnummer: WO9608660

(56) Entgegenhaltungen:
- FR-A- 399 592
- FR-A- 2 119 461
- FR-A- 2 266 819
- GB-A- 455 516
- GB-A- 1 328 244
- GB-A- 2 273 135
- US-A- 2 868 594
- US-A- 4 183 590

## Beschreibung

Die Neuerung betrifft ein Flanschlager zur radialen Lagerung von Wellen in Druckmaschinen, Landmaschinen, Futteranlagen, Baumaschinen oder anderen Apparaten mit einem Außenring und einem auf dessen Laufbahn abwälzenden Wälzkörperkranz und ggf. einem Innenring, wobei der Außenring zur Befestigung an einer Anschlußkonstruktion mit radial nach außen gerichteten Flanschen versehen ist.

Derartige Flanschlager sind schon seit langem bekannt und bestehen aus einem den Lageraußenring bildenden Gehäuse, das aus Grauguß gefertigt, aus Stahlblech gepreßt oder aus einem Massivteil spanend hergestellt ist (Katalog 41510 B der Fa. FAG, Seite 466, DD 41 596, GM 19 45 404). Nachteilig dabei ist, daß der Lageraußenring mit seinen Flanschen nur sehr aufwendig zu fertigen ist. So muß beispielsweise für einen gegossenen Lagerring eine entsprechende Form hergestellt werden, für einen gepressten Lagerring sind eine Vielzahl von einzelnen Umformschritten erforderlich, und die Herstellung eines massiven Lagerringes mit Flansch erfordert bei dessen spanender Bearbeitung einen gewaltigen Materialverlust.

Aus der Patentschrift GB-A-13 28 244 ist ein weiteres Flansch lager zur radialen Lagerung von Wellen bekannt. Der Flansch ist in diesem Fall jedoch an einer der Stirnseiten der Lagerringe befestigt.

Schließlich ist in diesem Zusammenhang aus der US-A-28 68 594 ein weiteres Flanschlager bekannt. Dort ist der Lageraußenring in einem gabelartigen Blech gehalten, dessen zwei Schenkel in zwei tangential verlaufende Nuten eingreifen. Am anderen von den Schenkeln abgewandten Ende geht das Halteblech in einen abgewinkelten Teil über, der mit Befestigungsbohrungen versehen ist. Nachteilig dabei ist, daß ein solches Lager aufgrund des dünnwandigen Halteblechs nur geringen Belastungen ausgesetzt werden kann.

Der Neuerung liegt deshalb die Aufgabe zugrunde, ein Flanschlager zu schaffen, das wesentlich einfacher in der Herstellung als die bisherigen Flanschlager ist, wodurch eine Verbilligung und damit eine größere Einsatzmöglichkeit auch für untergeordnete Lagerungsfälle geschaffen wird.

Nach der Neuerung wird diese Aufgabe dadurch gelöst, daß die Flansche lösbar oder unlösbar mit Anflächungen der radialen Außenfläche des Außenringes verbunden sind und tangential verlaufende Befestigungsbohrungen aufweisen, wobei die axiale Ausdehnung der Flansche der axialen Ausdehnung des Außenringes entspricht.

Durch diese Lagergestaltung sind keine komplizierten Formen, keine Vielzahl von Umformschritten und keine hohen Materialverluste gegeben. Der Lageraußenring wird in einfacher Weise, zum Beispiel durch Anschleifen mit einer Anflächung versehen, mit der der Flansch unlösbar oder lösbar verbunden wird. Auf diese Weise entsteht ein einfach herzustellendes Flanschlager, das entsprechend seinen Anwendungsfällen durch Verschieben der Flansche nach oben oder nach unten entlang einer Längsmittelachse beliebig gestaltet werden kann. Auch lassen sich verschiedene Größen von Flanschlagern problemlos fertigen, da standardisierte Rohre unterschiedlicher Größen in einfacher Weise nach der Neuerung mit Flanschen versehen werden können.

Nach Anspruch 2 ist vorgesehen, daß die Flansche entweder unlösbar durch Schweißen, Löten, Kleben oder lösbar durch eine Schraubverbindung mit der Anflächung verbunden sind. Alle vier Verfahrensvarianten stehen gleichberechtigt nebeneinander und richten sich jeweils nach den vorgegebenen Anwendungsbedingungen.

Schließlich ist nach Anspruch 3 vorgesehen, daß die Flansche durch Laserschweißen mit den Anflächungen verbunden sind. Diese Schweißart garantiert eine geringe Wärmeentwicklung, so daß ein Wärmeverzug des Flansch lagers verhindert wird.

Die Neuerung wird an nachstehendem Ausführungsbeispiel näher erläutert. Es zeigen:
- Figur 1: einen Querschnitt durch ein Flanschlager entsprechend der Neuerung;
- Figur 2: einen Längsschnitt entsprechend der Linie II-II in Figur 1;
- Figur 3: eine vergrößerte Draufsicht auf einen angeschweißten Flansch und
- Figur 4: ein Flanschlager nach dem bisherigen Stand der Technik.

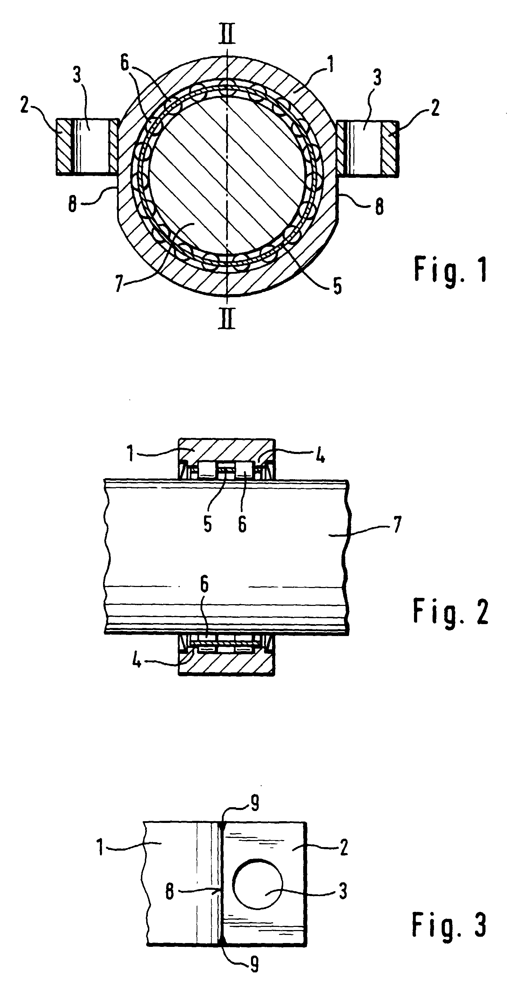

Das in den Figuren 1 bis 4 dargestellte Flanschlager besteht aus einem Lageraußenring 1, der zur Befestigung an eine nicht dargestellte Anschlußkonstruktion zwei radial nach außen gerichtete Flansche 2 aufweist, die wiederum je eine Befestigungsbohrung 3 besitzen. Der Lageraußenring 1 weist zwei Borde 4 auf, zwischen denen eine nicht näher bezeichnete Laufbahn gebildet ist, auf der in einem Käfig 5 geführte Wälzkörper 6 abrollen. Die andere ebenfalls nicht näher bezeichnete Laufbahn wird von einer Welle 7 gestellt.

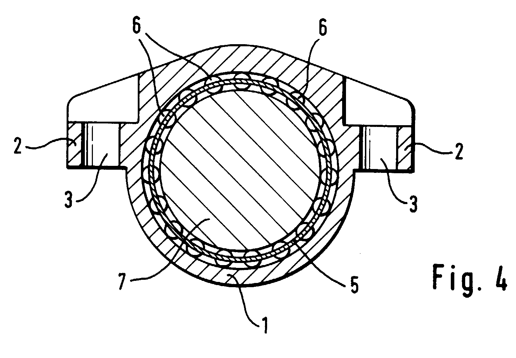

Wie aus Figur 4 ersichtlich, muß für den aus einem Massivteil hergestellten Lageraußenring 1 des Flanschlagers nach dem bisherigen Stand der Technik eine immense Zerspanungsarbeit aufgewendet werden. Die Breite des Massivteiles muß dabei von Flansch zu Flansch reichen, so daß mindestens die Hälfte des Massivteils zerspant wird.

Dem gegenüber ist aus Figur 1 erkennbar, daß der Lageraußenring aus einem handelsüblichen Rohr gefertigt werden kann, indem dieses Rohr auf die benötigte Breite abgelängt wird und anschließend an jeder Außenseite mit einer Anflachung versehen wird. An diese Anflächung wird dann der entsprechende Befestigungsflansch angebracht. Wie aus der Draufsicht nach Figur 3 erkennbar, entstehen an der Stirnseite des Lageraußenrings 1 beim Schweißen zwei Schweißnähte 9, die eine feste Verbindung zwischen Lageraußenring 1 und Flansch 2 bewirken.

Ein nach der Neuerung gestaltetes Flanschlager kann beispielsweise aus der Stahlsorte 16 Mn Cr 5 gefertigt sein, wobei zweckmäßiger Weise zunächst Flansch und Außenring durch Schweißen miteinander verbunden werden und anschließend eine Einsatzhärtung erfolgt. Gegenüber einem spanend hergestellten Flanschlager läßt sich auf diese Weise eine beträchtliche Kostenreduzierung realisieren.

### Bezugszeichen

- 1: Außenring
- 2: Flansch
- 3: Befestigungsbohrung
- 4: Bord
- 5: Käfig
- 6: Wälzkörper
- 7: Welle
- 8: Anflächung
- 9: Schweißnaht

## Patentansprüche

1. Flanschlager zur radialen Lagerung von Wellen (7) in Druckmaschinen, Landmaschinen, Futteranlagen, Baumaschinen oder anderen Apparaten mit einem Außenring (1) und einem auf dessen Laufbahn abwälzenden Wälzkörperkranz und ggf. einem Innenring, wobei der Außenring (1) zur Befestigung an einer Anschlußkonstruktion mit radial nach außen gerichteten Flanschen (2) versehen ist, **dadurch gekennzeichnet,** daß die Flansche lösbar oder unlösbar mit Anflächungen (8) der radialen Außenfläche des Außenrings (1) verbunden sind und tangential verlaufende Befestigungsbohrungen (3) aufweisen, wobei die axiale Ausdehnung der Flansche (2) der axialen Ausdehnung des Außenringes (1) entspricht.

2. Flanschlager nach Anspruch 1, **dadurch gekennzeichnet,** daß die Flansche (2) unlösbar durch Schweißen, Löten, Kleben oder lösbar durch eine Schraubverbindung verbunden sind.

3. Flanschlager nach Anspruch 1 und 2, **dadurch gekennzeichnet,** daß die Flansche (2) durch Laserschweißen verbunden sind.

## Claims

1. Flanged bearing for the radial mounting of shafts (7) in printing machines, agricultural machines, fodder plants, construction machines or other equipment, said flanged bearing having an outer ring (1) and a rolling element crown ring in rolling contact with the raceway thereof and, if necessary, an inner ring, the outer ring (1) comprising radially outward directed flanges (2) for fixing on a connecting structure, characterised in that the flanges are connected detachably or undetachably to flattened regions (8) of the outer radial surface of the outer ring (1) and comprise tangentially extending fixing bores (3), the axial dimension of the flanges (2) corresponding to the axial dimension of the outer ring (1).

2. Flanged bearing according to Claim 1, characterised in that the flanges (2) are connected undetachably by welding, soldering or gluing, or detachably by a screw connection.

3. Flanged bearing according to Claim 1 and 2, characterised in that the flanges (2) are connected by laser welding.

## Revendications

1. Palier à brides pour le montage radial d'arbres (7) dans des machines à imprimer, des machines agricoles, des installations fourragères ou dans d'autres appareils, ledit palier comprenant une bague externe (1) et une couronne à éléments roulants qui est en contact de roulement avec la piste de ladite bague externe (1), ledit palier comprenant, en outre, le cas échéant, une bague interne, la bague externe (1) étant munie de brides (2) dirigées radialement ver l'extérieur pour la fixation sur une structure de liaison, caractérisé en ce que les brides (2) sont reliées de manière détachable ou non détachable à des régions aplaties (8) de la surface radiale extérieure de la bague externe (1) et comprennent des alésages de fixation (3) qui s'étendent tangentiellement, l'étendue axiale des brides (2) correspondant à l'étendue axiale de la bague externe (1).

2. Palier à brides selon la revendication 1, caractérisé en ce que les brides (2) sont reliées de manière non détachable par soudage, brasage ou collage, ou bien, de manière détachable par une liaison vissée.

3. Palier à brides selon les revendications 1 et 2, caractérisé en ce que les brides (2) sont reliées par soudage au laser.
